# EUROPÄISCHE PATENTSCHRIFT

(11) **EP 1 436 344 B1**
(45) Veröffentlichungstag und Bekanntmachung des Hinweises auf die Patenterteilung: **19.01.2005**
(21) Anmeldenummer: 02779431.2
(22) Anmeldetag: 27.09.2002
(51) Int. Cl.: C08G 65/40, C08L 71/00, C08L 67/03, C08L 69/00, C08G 65/48, C08L 81/06, C08G 75/20, C08G 75/23

(54) **THERMOPLASTISCHE FORMMASSEN MIT VERBESSERTER SCHMELZESTABILITÄT AUF BASIS VON POLYARYLENETHERSULFONEN**
THERMOPLASTIC MOULDING MATERIALS, BASED ON POLYARYLENE-ETHERSULPHONES, HAVING ENHANCED MELTING STABILITY
MATIERES A MOULER THERMOPLASTIQUES, A BASE DE POLYARYLENE-ETHERSULFONES, PRESENTANT UNE STABILITE ACCRUE A LA FUSION

(30) Priorität: 10.10.2001 DE 10149871
(43) Veröffentlichungstag der Anmeldung: 14.07.2004
(73) Patentinhaber: BASF AKTIENGESELLSCHAFT, 67056 Ludwigshafen (DE)
(72) Erfinder: WEBER, Martin, 67487 Maikammer (DE); QUEISSER, Joachim, 60594 Frankfurt (DE)
(86) Internationale Anmeldenummer: PCT/EP2002/010868
(87) Internationale Veröffentlichungsnummer: WO 2003/033565

(56) Entgegenhaltungen:
- EP-A- 0 185 237
- DE-A- 1 595 710
- US-A- 3 960 815
- US-A- 4 746 710
- US-A- 5 270 435

## Beschreibung

Die vorliegende Erfindung betrifft Formmassen, die
A) 39 bis 99 Gew.-% mindestens eines aus difunktionellen Monomereinheiten aufgebauten Polyarylenethersulfons,
B) 1 bis 20 Gew.-% mindestens eines Polyarylenethersulfons, enthaltend 0,1 bis 10 Gew.-%, bezogen auf das Gesamtgewicht der Komponente B, sich von 1,1,1-Tris(4-hydroxyphenyl)ethan ableitende Einheiten,
C) 0 bis 60 Gew.-% mindestens eines Füllstoffs,
D) 0 bis 40 Gew.-% mindestens eines schlagzähmodifizierenden Kautschuks und
E) 0 bis 40 Gew.-% eines oder mehrerer unterschiedlicher Zusatzstoffe,
enthalten, wobei die Gewichtsprozente der Komponenten A bis E zusammen 100 % ergeben.

Darüber hinaus betrifft die vorliegende Erfindung Verfahren zur Herstellung dieser Formmassen, die Verwendung dieser Formmassen zur Herstellung von Formteilen, Folien, Fasern oder Schäumen sowie Formteile, Folien, Fasern oder Schäume aus den erfindungsgemäßen Formmassen.

Formmassen auf der Basis von Polyarylenethersulfonen sind hinlänglich bekannt. Sie finden aufgrund ihrer hohen Wärmeform- und Chemikalienbeständigkeit weitverbreiteten Einsatz in Anwendungen, bei denen die verwendeten Materialien thermisch oder chemisch stark beansprucht werden. Aufgrund ihrer im Vergleich zu anderen Thermoplasten hohen Glas- und Erweichungstemperaturen sowie der vergleichsweise hohen Schmelzeviskosität sind zur thermoplastischen Verarbeitung der Polyarylenethersulfone relativ hohe Verarbeitungstemperaturen nötig. Diese hohen Verarbeitungstemperaturen führen in der Polyarylenethersulfonschmelze häufig zu unerwünschten Nebenreaktionen wie Molekulargewichtsaufbau oder Vernetzung.

Um die hohe Schmelzeviskosität von Polyarylenethersulfonen zu senken und die Fließfähigkeit zu verbessern, ist der Einsatz von Schmiermitteln wie beispielsweise Stearaten oder oligomeren Fettsäureestern (siehe beispielsweise R. Gächter, H. Müller, Kunststoff-Additive, Hanser-Verlag München, 3. Ausgabe, 1989, S. 443 ff.) oder flüssigkristallinen Polymeren (s. beispielsweise G. Kiss, Polym. Eng. & Sci. 27 (1987) 410 oder K. Engberg et al., Polym. Eng. & Sci. 34 (1994) 1336) bekannt. Unerwünschte Nebenreaktion in der Polyarylenethersulfonschmelze lassen sich durch diese Zusätze aber nicht in ausreichendem Maß verhindern, was beispielsweise durch Verfärbungen der Schmelze zum Ausdruck kommt.

Aus US 3,960,815 sind verzweigte Polyarylenethersulfone bekannt, die durch Anwesenheit von aromatischen Verbindungen mit mindestens drei funktionellen Hydroxyl- oder Halogenidgruppen in der Polyarylenethersulfonsynthese aus aromatischen Bishydroxylaten und aromatischen Bishalogenverbindungen erhalten werden. Diese verzweigten Polyarylenethersulfone besitzen eine verbesserte Beständigkeit gegen ungesättigte Polyesterharze, eine verringerte Entflammbarkeit und eine geringere Neigung zu Spannungsrißkorrosion. Die Schmelzestabilität dieser verzweigten Polyarylenethersulfone ist aber verbesserungswürdig.

Der vorliegenden Erfindung lag die Aufgabe zugrunde, thermoplastische Formmassen auf Basis von Polyarylenethersulfonen zur Verfügung zu stellen, die eine verbesserte Schmelzestabilität, d.h. eine geringere Neigung zu unerwünschten Nebenreaktionen in der Schmelze wie Molekulargewichtsaufbau, Vernetzung oder Verfärbung, aufweisen.

Diese Aufgabe wird von den eingangs definierten Formmassen, die im folgenden näher beschrieben sind, erfüllt.

### Komponente A

Die erfindungsgemäßen Formmassen enthalten die Komponente A in Mengen von 39 bis 99, insbesondere von 49 bis 99 Gew.-%, und besonders bevorzugt von 58 bis 98 Gew.-% bezogen auf das Gesamtgewicht von A bis E.

Als Komponente A wird erfindungsgemäß ein aus difunktionellen Monomereinheiten aufgebautes Polyarylenethersulfon eingesetzt. Es können auch Mischungen aus zwei oder mehreren unterschiedlichen aus difunktionellen Monomereinheiten aufgebauten Polyarylenethersulfonen als Komponente A eingesetzt werden.

Die Arylengruppen der Polyarylenethersulfone A können gleich oder verschieden sein und unabhängig voneinander einen aromatischen Rest mit 6 bis 18 C-Atomen bedeuten. Beispiele geeigneter Arylenreste sind Phenylen, Bisphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Substituenten sind beispielsweise Alkyl-, Arylalkyl-, Aryl-, Nitro-, Cyano- oder Alkoxygruppen sowie Heteroaromaten wie Pyridin und Halogenatome. Zu den bevorzugten Substituenten zählen Alkylreste mit bis zu 10 Kohlenstoffatomen wie Methyl, Ethyl, i-Propyl, n-Hexyl, i-Hexyl, C₁- bis C₁₀-Alkoxyreste wie Methoxy, Ethoxy, n-Propoxy, n-Butoxy, Arylreste mit bis zu 20 Kohlenstoffatomen wie Phenyl oder Naphthyl sowie Fluor und Chlor.

Des weiteren sind Substituenten bevorzugt, die durch Reaktion der Polyarylenethersulfone mit einer reaktiven Verbindung, die neben einer C-C-Doppel- oder -Dreifachbindung eine bzw. mehrere Carbonyl-, Carbonsäure-, Carboxylat-, Säureanhydrid, Säureamid-, Säureimid-, Carbonsäureester-, Amino-, Hydroxyl-, Epoxi-, Oxazolin-, Urethan-, Harnstoff-, Lactam- oder Halogenbenzylgruppen enthält, erhältlich sind. Die Arylengruppen der Polyarylenethersulfone können neben -SO₂-, z.B. über -O-, -S-, -SO-, -CO-, -N=N-, -COO-, einen Alkylenrest, der gewünschtenfalls substituiert sein kann, oder eine chemische Bindung miteinander verknüpft sein.

Bevorzugte erfindungsgemäß brauchbare Polyarylenethersulfone (Komponente A) sind aufgebaut aus wiederkehrenden Einheiten der Formel I 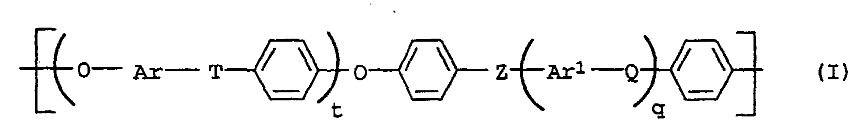 worin
- t und q: unabhängig voneinander für 0, 1, 2 oder 3 stehen,
- Q, T, und Z: unabhängig voneinander jeweils eine chemische Bindung oder eine Gruppe, ausgewählt unter -O-, -S-, -SO₂-, S=O, C=O, -N=N-, -R^{a}C=CR^{b}- und -CR^{c}R^{d}-, bedeuten, wobei
- R^{a} und R^{b}: unabhängig voneinander jeweils für ein Wasserstoffatom oder eine C₁-C₁₂-Alkylgruppe stehen und
- R^{c} und R^{d}: unabhängig voneinander jeweils für ein Wasserstoffatom oder eine C₁-C₁₂-Alkyl-, C₁-C₁₂-Alkoxy- oder C₆-C₁₈-Arylgruppe stehen, wobei R^{c} und R^{d}, wenn sie für eine Alkyl-, Alkoxy- oder Arylgruppe stehen, unabhängig voneinander mit Fluor- und/oder Chloratomen substituiert sein können oder wobei R^{c} und R^{d} zusammen mit dem C-Atom an das sie gebunden sind, eine C₃-C₁₂-Cycloalkylgruppe bilden können, die mit einer oder mehreren C₁-C₆-Alkylgruppen substituiert sein kann,
mit der Maßgabe, daß mindestens eine der Gruppen T, Q und Z für -SO₂- steht und, wenn t und q für 0 stehen, Z für -SO₂- steht,
- Ar und Ar¹: unabhängig voneinander jeweils für eine C₆-C₁₈-Arylengruppe steht, wobei diese mit C₁-C₁₂-Alkyl-, C₆-C₁₈-Aryl-, C₁-C₁₂-Alkoxygruppen oder Halogenatomen substituiert sein kann.

Es können auch verschiedene Einheiten der Formel I statistisch oder in Blöcken verteilt im Polyarylenethersulfon vorliegen.

Die Herstellung erfindungsgemäß brauchbarer Polyarylenether A kann beispielsweise in Anlehnung an GB 1 152 035 und US 4,870,153 erfolgen, worauf hiermit ausdrücklich Bezug genommen wird. Geeignete Verfahrensbedingungen zur Synthese von Polyarylenethersulfonen sind beispielsweise in EP-A- 0 113 112 und EP-A- 0 135 130 beschrieben. Besonders geeignet ist die Umsetzung der Monomeren in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Katalysator. Die Umsetzung in der Schmelze ist ebenfalls bevorzugt. Beispiele für geeignete Polyarylenethersulfone A sind solche, mit mindestens einer der folgenden wiederkehrenden Struktureinheiten I₁ bis I₁₅:

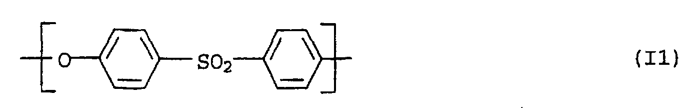

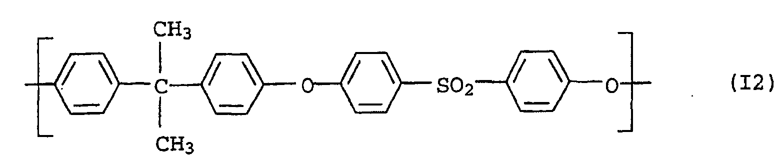

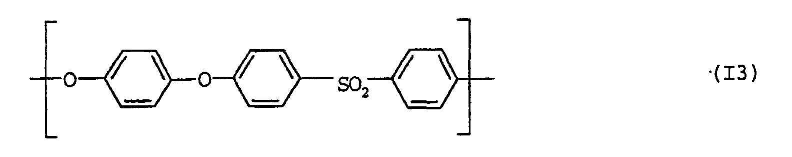

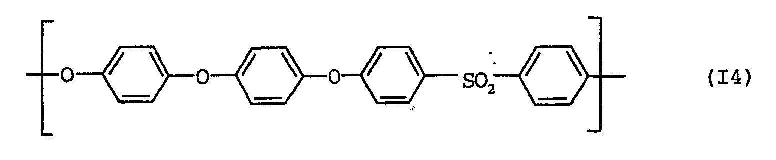

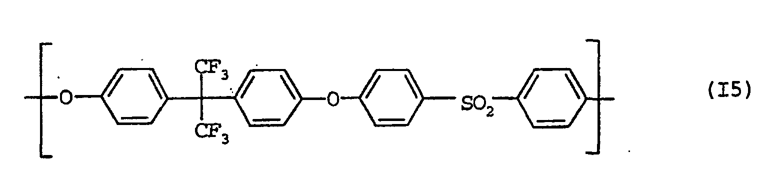

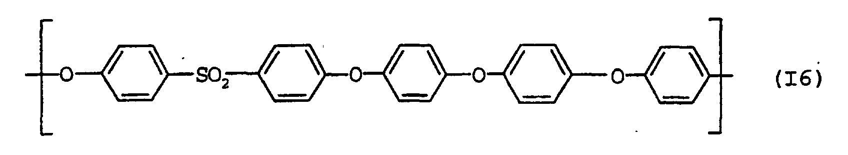

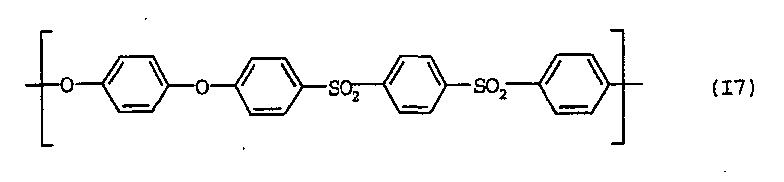

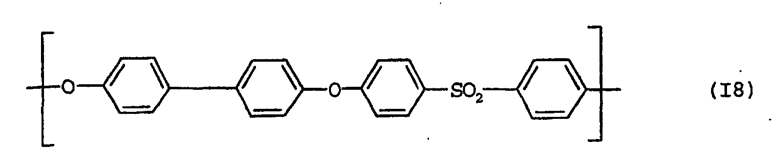

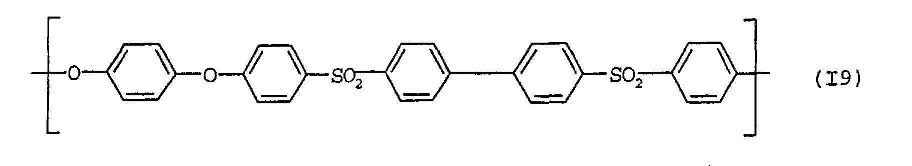

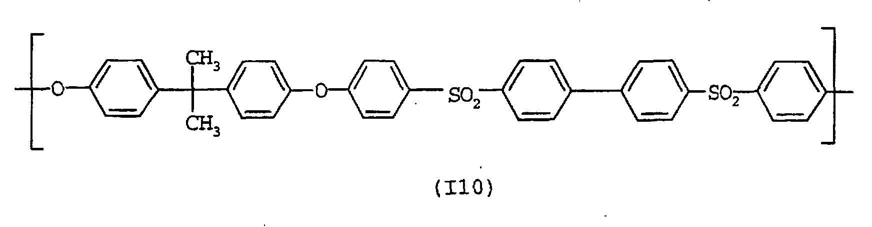

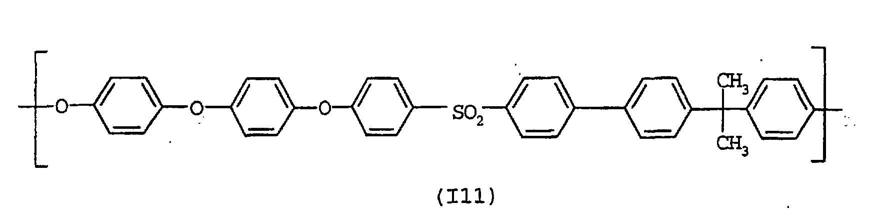

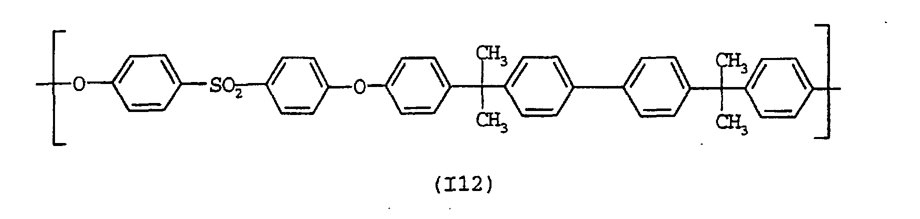

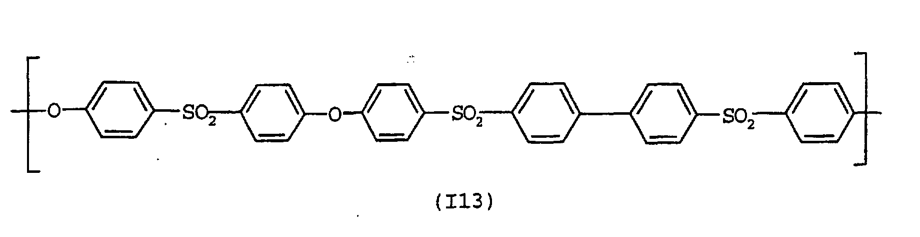

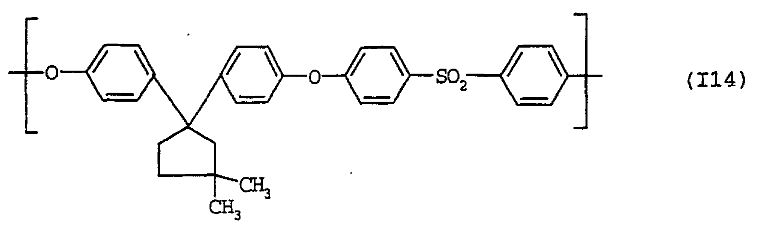

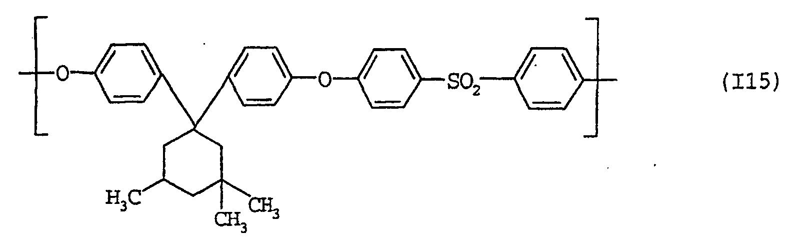

Als besonders bevorzugte Einheiten der Formel I sind Einheiten der Formeln I₁ und I₂ zu nennen, welche einzeln oder im Gemisch vorliegen können.

Je nach Synthesebedingungen können die Polyarylenethersulfone unterschiedliche funktionale Gruppen aufweisen. Diese funktionalen Gruppen können an Atome der Polymerkette gebunden sein oder als Endgruppen der Polymerkette vorliegen.
Zu diesen funktionalen Gruppen zählen Halogen-, insbesondere Chlor-, Alkoxy-, vor allem Methoxy- oder Ethoxy-, Aryloxy-, bevorzugt Phenoxy oder Benzyloxygruppen. Als weitere Beispiele für solche funktionale Gruppen sind Hydroxy-, Amino-, Anhydrid-, Epoxy- oder Carboxylgruppen zu nennen. Darunter sind Polyarylenethersulfone mit Amino-, Anhydrid oder Epoayendgruppen oder deren Mischungen besonders bevorzugt.
Die Herstellung von Polyarylenethersulfonen A enthaltend funktionale Gruppen ist in DE-A1 199 61 040 sowie der darin genannten Literatur beschrieben.

Die Polyarylenethersulfone A können auch Co- oder Blockcopolymere sein, in denen Polyarylenethersulfonsegmente und Segmente von anderen thermoplastischen Polymeren, wie Polyestern, aromatischen Polycarbonaten, Polyestercarbonaten, Polysiloxanen, Polyimiden oder Polyetherimiden vorliegen. Die Molekulargewichte (Zahlenmittel) der Blöcke- bzw. der Pfropfarme in den Copolymeren liegen in der Regel im Bereich von 1 000 bis 30 000 g/mol. Die Blöcke unterschiedlicher Struktur können alternierend oder statistisch angeordnet sein. Der Gewichtsanteil der Polyarylenethersulfone in den Co- oder Blockcopolymeren beträgt im allgemeinen mindestens 10 Gew.-%. Der Gewichtsanteil der Polyarylenethersulfone kann bis zu 97 Gew.-% betragen. Bevorzugt werden Co- oder Blockcopolymere mit einem Gewichtsanteil an Polyarylenethersulfonen mit bis zu 90 Gew.-%. Besonders bevorzugt werden Co- oder Blockcopolymere mit 20 bis 80 Gew.-% Polyarylenethersulfonen.

Im allgemeinen weisen die Polyarylenethersulfone mittlere Molekulargewichte Mₙ (Zahlenmittel) im Bereich von 2500 bis 60 000 g/mol und relative Viskositäten von 0,15 bis 0,95 dl/g auf. Die relativen Viskositäten werden je nach Löslichkeit der Polyarylenethersulfone entweder in 1 gew.-%iger N-Methylpyrrolidon-Lösung oder in Mischungen aus Phenol und Dichlorbenzol bei jeweils 20°C bzw. 25°C gemessen.

### Komponente B

Die erfindungsgemäßen Formmassen enthalten die Komponente B in Mengen von 1 bis 20, insbesondere von 1 bis 18 Gew.-%, besonders bevorzugt von 2 bis 15 Gew.-%, bezogen auf das Gesamtgewicht von A bis E.

Als Komponente B der erfindungsgemäßen Formmassen werden verzweigte Polyarylenethersulfone eingesetzt. Polyarylenethersulfone B sind aus den bereits bei Komponente A beschriebenen Struktureinheiten aufgebaut, wobei Komponente B jedoch zusätzlich 0,1 bis 10 Gew.-%, bevorzugt 0,5 bis 7,5 Gew.-%, besonders bevorzugt 1,0 bis 6,0 Gew.-%, ganz besonders bevorzugt 1,5 bis 2,5 Gew.-%, jeweils bezogen auf das Gesamtgewicht der Komponente B, sich von 1,1,1-Tris(4-hydroxyphenyl)ethan ableitende Einheiten enthält.

Bevorzugte Polyarylenethersulfone B enthalten
0 bis 100 Mol-% wiederkehrende Einheiten der Formel I1,
0 bis 100 Mol-% wiederkehrende Einheiten der Formel I2,
wobei die Stoffmengenprozente wiederkehrender Einheiten der Formeln I1 und I2 zusammen 100 Mol-% ergeben, und
0,1 bis 10 Gew.-%, bevorzugt 0,5 bis 7,5 Gew.-%, besonders bevorzugt 1,0 bis 6,0 Gew.-%, ganz besonders bevorzugt 1,5 bis 2,5 Gew.-%, jeweils bezogen auf das Gesamtgewicht der Polyarylenethersulfone B, sich von 1,1,1-Tris(4-hydroxyphenyl)ethan ableitende Einheiten.

Polyarylenethersulfone B werden nach den bereits bei der Herstellung von Komponente A beschriebenen Methoden hergestellt, wobei jedoch ein entsprechender Teil der difunktionellen Monomerkomponenten, bevorzugt der difunktionellen Hydroxykomponente, durch die gewünschte Menge 1,1,1-Tris(4-hydroxyphenyl)ethan ersetzt wird. Synthesemethoden für Komponente B sind auch in US 3,960,815 beschrieben.

### Komponente C

Die erfindungsgemäßen Formmassen können optional 0 bis 60 Gew.-% Verstärkungsmittel oder Füllstoffe enthalten. Vorzugsweise sind 0 bis 50, insbesondere 0 bis 40 Gew.-% faser- oder teilchenförmige Füllstoffe oder Verstärkungsstoffe oder deren Mischungen in den erfindungsgemäßen Formmassen enthalten. Die Mengenangaben beziehen sich jeweils auf die Gesamtmasse der Komponenten A bis E.

Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte, bevorzugt einer Polyurethanschlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Carbonate wie Magnesiumcarbonat (Kreide), gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit oder Aluminiumsilikate wie Kaolin, besonders kalzinierter Kaolin.

Nach einer besonders bevorzugten Ausführungsform werden teilchenförmige Füllstoffe verwendet, von denen mindestens 95 Gew.-%, bevorzugt mindestens 98 Gew.-% der Teilchen einen Durchmesser (größte Ausdehnung), bestimmt am fertigen Produkt, von weniger als 45 µm, bevorzugt weniger als 40 µm aufweisen und deren sogenanntes Aspektverhältnis im Bereich von 1 bis 25, bevorzugt im Bereich von 2 bis 20 liegt, bestimmt am fertigen Produkt.

Die Teilchendurchmesser können dabei z.B. dadurch bestimmt werden, daß elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, die weniger als 40 µm beträgt kann auch mittels Siebanalyse gemessen werden. Das Aspektverhältnis ist das Verhältnis von Teilchendurchmesser zu Dicke (größter Ausdehnung zu kleinster Ausdehnung).

Besonders bevorzugt werden als teilchenförmige Füllstoffe Talkum, Kaolin, wie calcinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 µm und ein Aspektverhältnis von 1,2 bis 20, jeweils bestimmt am fertigen Produkt.

### Komponente D

Optional können die erfindungsgemäßen Formmassen schlagzähmodifizierende Kautschuke D enthalten. Deren Anteil beträgt von 0 bis 40, insbesondere von 0 bis 25 Gew.-%, besonders bevorzugt 0 bis 20 Gew.-%, bezogen auf das Gesamtgewicht von A bis E.

Als Komponente D können auch Mischungen aus zwei oder mehreren unterschiedlichen schlagzähmodifizierenden Kautschuken eingesetzt werden.

Unter Kautschuken sind allgemein Polymere mit bei Raumtemperatur gummielastischen Eigenschaften zu verstehen.

Bevorzugte Kautschuke, die die Zähigkeit der Formmassen erhöhen, weisen üblicherweise zwei wesentliche Merkmale auf: sie enthalten einen elastomeren Anteil, der eine Glasübergangstemperatur von weniger als -10°C, vorzugsweise von weniger als -30°C aufweist, und sie enthalten mindestens eine funktionelle Gruppe, die mit dem Polyarylenethersulfon A bzw. B wechselwirken kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen.

Zu den bevorzugten funktionalisierten Kautschuken D zählen funktionalisierte Polyolefinkautschuke, die aus folgenden Komponenten aufgebaut sind:
d₁) 40 bis 99 Gew.-% mindestens eines α-Olefins mit 2 bis 8 C-Atomen;
d₂) 0 bis 50 Gew.-% eines Diens;
d₃) 0 bis 45 Gew.-% eines C₁-C₁₂-Alkylesters der Acrylsäure oder Methacrylsäure oder Mischungen derartiger Ester;
d₄) 0 bis 40 Gew.-% einer ethylenisch ungesättigten C₂-C₂₀-Monooder Dicarbonsäure oder einem funktionellen Derivat einer solchen Säure;
d₅) 1 bis 40 Gew.-% eines Epoxygruppen enthaltenden Monomeren; und
d₆) 0 bis 5 Gew.-% sonstiger radikalisch polymerisierbarer Monomerer.

Als Beispiele für geeignete α-Olefine d₁ können Ethylen, Propylen, 1-Butylen, 1-Pentylen, 1-Hexylen, 1-Heptylen, 1-Octylen, 2-Methylpropylen, 3-Methyl-1-butylen und 3-Ethyl-1-butylen genannt werden, wobei Ethylen und Propylen bevorzugt sind.

Als geeignete Dien-Monomere d₂ seien beispielsweise konjugierte Diene mit 4 bis 8 C-Atomen, wie Isopren und Butadien, nicht-konjugierte Diene mit 5 bis 25 C-Atomen, wie Penta-1,4-dien, Hexa-1,4-dien, Hexa-1,5-dien, 2,5-Dimethylhexa-1,5-dien und Octa-1,4-dien, cyclische Diene, wie Cyclopentadien, Cyclohexadiene, Cyclooctadiene und Dicyclopentadien, sowie Alkenylnorbornene, wie 5-Ethyliden-2-norbornen, 5-Butyliden-2-norbornen, 2-Methallyl-5-norbornen, 2-Isopropenyl-5-norbornen und Tricyclodiene, wie 3-Methyltricyclo-(5.2.1.0.2.6)-3,8-decadien, oder deren Mischungen genannt. Bevorzugt werden Hexa-1,5-dien, 5-Ethylidennorbornen und Dicyclopentadien. Der Diengehalt beträgt im allgemeinen 0 bis 50, vorzugsweise 0,5 bis 50, insbesondere 2 bis 20 und besonders bevorzugt 3 bis 15 Gew.-%, bezogen auf das Gesamtgewicht des Olefinpolymerisats.

Beispiele für geeignete Ester d₃ sind Methyl-, Ethyl-, Propyl-, n-Butyl, i-Butyl- und 2-Ethylhexyl-, Octyl- und Decylacrylate bzw. die entsprechenden Ester der Methacrylsäure. Von diesen werden Methyl-, Ethyl-, Propyl-, n-Butyl- und 2-Ethylhexylacrylat bzw. -methacrylat besonders bevorzugt.

Anstelle der Ester d₃ oder zusätzlich zu diesen können in den Olefinpolymerisaten auch säurefunktionelle und/oder latent säurefunktionelle Monomere ethylenisch ungesättigter Mono- oder Dicarbonsäuren d₄ enthalten sein.

Als Beispiele für Monomere d₄ seien Acrylsäure, Methacrylsäure, tertiäre Alkylester dieser Säuren, insbesondere t.-Butylacrylat und Dicarbonsäuren, wie Maleinsäure und Fumarsäure, oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit 2 bis 20 C-Atomen, insbesondere Maleinsäureanhydrid und tertiäre C₁-C₁₂-Alkylester der vorstehend genannten Säuren, insbesondere t.-Butylacrylat und t.-Butylmethacrylat angeführt.

Ethylenisch ungesättigte Dicarbonsäuren und Anhydride d₄ sind darstellbar durch folgende allgemeine Formeln II und III:

R¹(COOR²)C=C(COOR³)R⁴ (II)

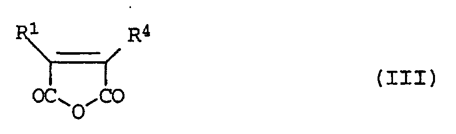

worin R¹, R², R³ und R⁴ unabhängig voneinander für H oder C₁-C₆-Alkyl stehen.

Epoxygruppen tragende Monomere d₅ sind darstellbar durch folgende allgemeine Formeln IV und V 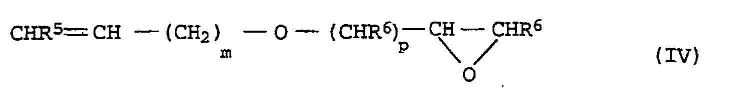 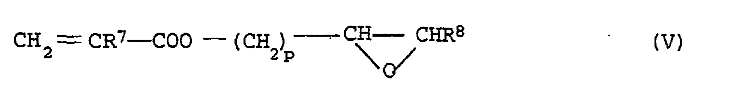 worin R⁵, R⁶, R⁷ und R⁸ unabhängig voneinander für H oder C₁-C₆-Alkyl stehen, m eine ganze Zahl von 0 bis 20 und p eine ganze Zahl von 0 bis 10 ist.

Bevorzugt stehen R¹ bis R⁸ für Wasserstoff, m für den Wert 0 oder 1 und p für den Wert 1.

Bevorzugte Verbindungen d₄ bzw. d₅ sind Maleinsäure, Fumarsäure und Maleinsäureanhydrid bzw. Alkenylglycidylether und Vinylglycidylether.

Besonders bevorzugte Verbindungen der Formeln II und III bzw. IV und V sind Maleinsäure und Maleinsäureanhydrid bzw. Epoxygruppenenthaltende Ester der Acrylsäure und/oder Methacrylsäure, insbesondere Glycidylacrylat und Glycidylmethacrylat.

Besonders bevorzugt sind Olefinpolymerisate aus

| | |
|---|---|
| 49,9 bis 98,9, | insbesondere 59,85 bis 94,85 Gew.-% Ethylen, und |
| 1 bis 50 | insbesondere 5 bis 40 Gew.-% eines Esters der Acryl- oder Methacrylsäure |
| 0,1 bis 20,0, | insbesondere 0,15 bis 15 Gew.-% Glycidylacrylat und/oder Glycidylmethacrylat, Acrylsäure und/ oder Maleinsäureanhydrid. |

Besonders geeignete funktionalisierte Kautschuke D sind Ethylen-Methylmethacrylat-Glycidylmethacrylat-, Ethylen-Methylacrylat-Glycidylmethacrylat-, Ethylen-Methylacrylat-Glycidylacrylat- und Ethylen-Methylmethacrylat-Glycidylacrylat-Polymere.

Als sonstige Monomere d₆ kommen z.B. Vinylester oder Vinylether oder deren Mischungen in Betracht.

Die Herstellung der vorstehend beschriebenen Polymere kann nach an sich bekannten Verfahren erfolgen, vorzugsweise durch statistische Copolymerisation unter hohem Druck und erhöhter Temperatur.

Der Schmelzindex der Copolymeren liegt im allgemeinen im Bereich von 1 bis 80 g/10 min (gemessen bei 190°C und 2,16 kg Belastung).

Als weitere Gruppe von geeigneten Kautschuken sind sogenannte Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glasübergangstemperatur von mindestens 25°C, unter einem weichen Bestandteil ein Polymerisat mit einer Glasübergangstemperatur von höchstens 0°C. Diese Produkte weisen eine Struktur aus einem Kern (Pfropfgrundlage) und mindestens einer Schale (Pfropfauflage) auf, wobei sich die Struktur durch die Reihenfolge der Monomerenzugabe ergibt. Die weichen Bestandteile leiten sich i.a. von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

### Komponente E

Die erfindungsgemäßen Formmassen können als Komponente E Zusatzstoffe wie Verarbeitungshilfsmittel, Pigmente, Stabilisatoren, Flammschutzmittel oder Mischungen unterschiedlicher Additive enthalten. Übliche Zusatzstoffe sind beispielsweise auch Oxidationsverzögerer, Mittel gegen Wärmezersetzung und Zersetzung durch ultraviolettes Licht, Gleit- und Entformungsmittel, Farbstoffe und Weichmacher.

Deren Anteil beträgt erfindungsgemäß von 0 bis zu 40, vorzugsweise von 0 bis zu 20 Gew.-%, insbesondere 0 bis 15 Gew.-%, bezogen auf das Gesamtgewicht der Komponenten A bis E. Im Fall, daß es sich bei der Komponente E um Stabilisatoren handelt, beträgt der Anteil dieser Stabilisatoren üblicherweise bis zu 2 Gew.-%, vorzugsweise bis zu 1 Gew.-%, insbesondere bis zu 0,5 Gew.-%, bezogen auf das Gesamtgewicht von A bis E.

Pigmente und Farbstoffe sind allgemein in Mengen bis zu 6, bevorzugt bis zu 5 und insbesondere bis zu 3 Gew.-%, bezogen auf die Summe von A bis E, enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃·Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente oder Phthalocyanine erfindungsgemäß eingesetzt werden. Derartige Pigmente sind allgemein im Handel üblich.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, zum Beispiel Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.%, bezogen auf das Gewicht der Mischung A bis E, einsetzbar.

Als eine besonders bevorzugte Komponente E wird den erfindungsgemäßen Formmassen Kupfer-(I)-chlorid, Kupfer-(I)-bromid oder Kupfer-(I)-iodid oder deren Mischungen zugesetzt. Bevorzugt wird Kupfer-(I)-iodid verwendet. Die dabei eingesetzte Menge beträgt im allgemeinen bis zu 1,0, vorzugsweise bis zu 0,5 Gew.-% bezogen auf das Gesamtgewicht von A bis E.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Als weitere Zusatzstoffe kommen Nukleierungsmittel wie beispielsweise Talkum in Betracht.

Die erfindungsgemäßen Formmassen können nach an sich bekannten Verfahren, beispielsweise mittels Extrusion, hergestellt werden.

Die Formmassen können z.B. hergestellt werden, indem man die Ausgangskomponenten in üblichen Mischvorrichtungen wie Schneckenextrudern, vorzugsweise Zweischneckenextrudern, Brabender-Mühlen oder Banbury-Mühlen sowie Knetern mischt und anschließend extrudiert. Üblicherweise wird das Extrudat nach der Extrusion abgekühlt und zerkleinert.

Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 280 bis 370°C, bevorzugt 290 bis 360°C, erforderlich.

Die erfindungsgemäßen Formmassen zeichnen sich bei guten mechanischen Eigenschaften, wie beispielsweise hoher Wärmeformbeständigkeit oder Kerbschlagzähigkeit, guter Fließfähigkeit in der Schmelze und gutem Brandverhalten vor allem durch ihre verbesserte Schmelzestabilität aus.

Die erfindungsgemäßen Formmassen eignen sich zur Herstellung von Formteilen, Folien, Fasern oder Schäumen, die beispielsweise als Haushaltsartikel, elektrische oder elektronische Bauteile oder medizinisch-technische Geräte verwendet werden. Sie eignen sich insbesondere für die Herstellung von Formteilen im Fahrzeugsektor, insbesondere im Automobilbereich. Beispielhaft sind Saugrohre, Wasserkästen, Gehäuse, Lüftungsrohre, Befestigungsteile, Manschetten oder Lüfterräder zu nennen.

### Beispiele

### Untersuchungsmethoden:

Die Viskositätszahl (VZ [ml/g]) der Polyarylenethersulfone wurde in 1 gew.-% iger Lösung von N-Methylpyrrolidon bei 25°C ermittelt.

Die Glasübergangstemperatur T_{g} und der Schmelzpeak wurden anhand von DSC-Messungen von Proben im zweiten Aufheizcyclus bei einer Aufheizrate von 20 K/min bestimmt.

Die Wärmeformbeständigkeit der Proben wurde mittels der Vicat-Erweichungstemperatur (Vicat B [°C]) ermittelt. Diese wurde nach DIN 53 460 mit einer Kraft von 49,05 N und einer Temperatursteigerung von 50 K/h an Normkleinstäben ermittelt.

Die Schlagzähigkeit (aₙ [kJ/m²]) wurde an ISO-Stäben nach ISO 179 1eU bestimmt.

Die Kerbschlagzähigkeit (aₖ [kJ/m²]) wurde an ISO-Stäben nach ISO 179 1eA bestimmt.

Die Fließfähigkeit (MVI [ml/10']) wurde nach DIN 53 735 bei 320°C und einer Belastung von 21,6 kg bestimmt.

Als Maß für die Schmelzestabilität wurde in einem Kapillarrheometer bei 400°C die Änderung der Viskosität bei einer Scherrate von 1000 Hz über einen Zeitraum von 30 Minuten (erste Messung nach 5 Minuten, zweite Messung nach 35 Minuten) verfolgt. Angegeben wird jeweils der Quotient Q der nach 35 Minuten und 5 Minuten gemessenen Viskosität η: Q = η_{35'}/η_{5'}.

Das Brandverhalten der Proben wurde nach UL-94 an Stäben der Dicke 0,8 mm ermittelt.

### Herstellung der Formmassen

### Komponente A

Als Polyarylenethersulfon A1 wurde eines mit wiederkehrenden Einheiten der Formel I₁ verwendet, Ultrason® E 2010, Handelsprodukt der BASF Aktiengesellschaft. Dieses Produkt ist charakterisiert durch eine Viskositätszahl von 54 ml/g, gemessen in 1 %-iger NMP-Lösung bei 25°C.

### Komponente B

Komponente B1 wurde durch nucleophile aromatische Polykondensation wie folgt hergestellt:

287,08 g Dichlordiphenylsulfon, 238,91 g Dihydroxydiphenylsulfon und 9,18 g 1,1,1-Tris(4-hydroxyphenyl)ethan wurden in 1000 ml N-Methylpyrrolidon gelöst und mit 143,76 g wasserfreiem Kaliumcarbonat versetzt. Diese Mischung wurde 4 h bei 195°C gehalten. Nach Abkühlung auf 120°C wurde für 1 h Methylchlorid in die Lösung eingeleitet. Danach wurde der Ansatz durch Zugabe von 1000 ml N-Methylpyrrolidon verdünnt, die festen Bestandteile durch Filtration abgetrennt und das Polyarylethersulfon durch Fällung in einem Gemisch aus 10 Gew.-% N-Methylpyrrolidon und 90 Gew.-% Wasser isoliert. Nach sorgfältigem Waschen mit Wasser wurde das Polymer im Vakuum bei 120°C für 12 h getrocknet. Die Viskositätszahl VZ des Produkts B1 lag bei 58 ml/g, die Glastemperatur betrug 226°C.

Komponente B2 wurde durch nucleophile aromatische Polykondensation analog zu Komponente B1 hergestellt, jedoch betrug die Reaktionszeit der Monomere bei 195°C lediglich 3 h.
Die Viskositätszahl VZ des Produkts B2 lag bei 46 ml/g, die Glastemperatur betrug 225°C.

Komponente B3 wurde durch nucleophile aromatische Polykondensation analog zu Komponente B1 hergestellt, jedoch betrug die Reaktionszeit der Monomere bei 195°C lediglich 2,5 h.
Die Viskositätszahl VZ des Produkts B3 lag bei 39 ml/g, die Glastemperatur betrug 225°C.

Komponente B4 (zum Vergleich) wurde durch nucleophile aromatische Polykondensation analog zu Komponente B1 hergestellt, jedoch wurden als Ausgangsstoffe 287,08 g Dichlordiphenylsulfon, 249,63 g Dihydroxydiphenylsulfon und 0,46 g 1,1,1-Tris(4-hydroxyphenyl)ethan eingesetzt. Die Viskositätszahl VZ des Produkts B4 betrug 55 ml/g.

### Komponente C

Als Füllstoff C1 wurden Schnittglasfasern mit Polyurethanschlichte, Faserdurchmesser 10 µm, eingesetzt.

Die Komponenten wurden in einem Zweiwellenextruder bei einer Massetemperatur von 320 bis 350°C gemischt. Die Schmelze wurde durch ein Wasserbad geleitet und granuliert.

Die Formmassen wurden bei 340°C verarbeitet. Die Formtemperatur war jeweils 100°C.

Die Zusammensetzung der Formmassen und die Ergebnisse der Prüfungen sind in der Tabelle 1 aufgeführt.

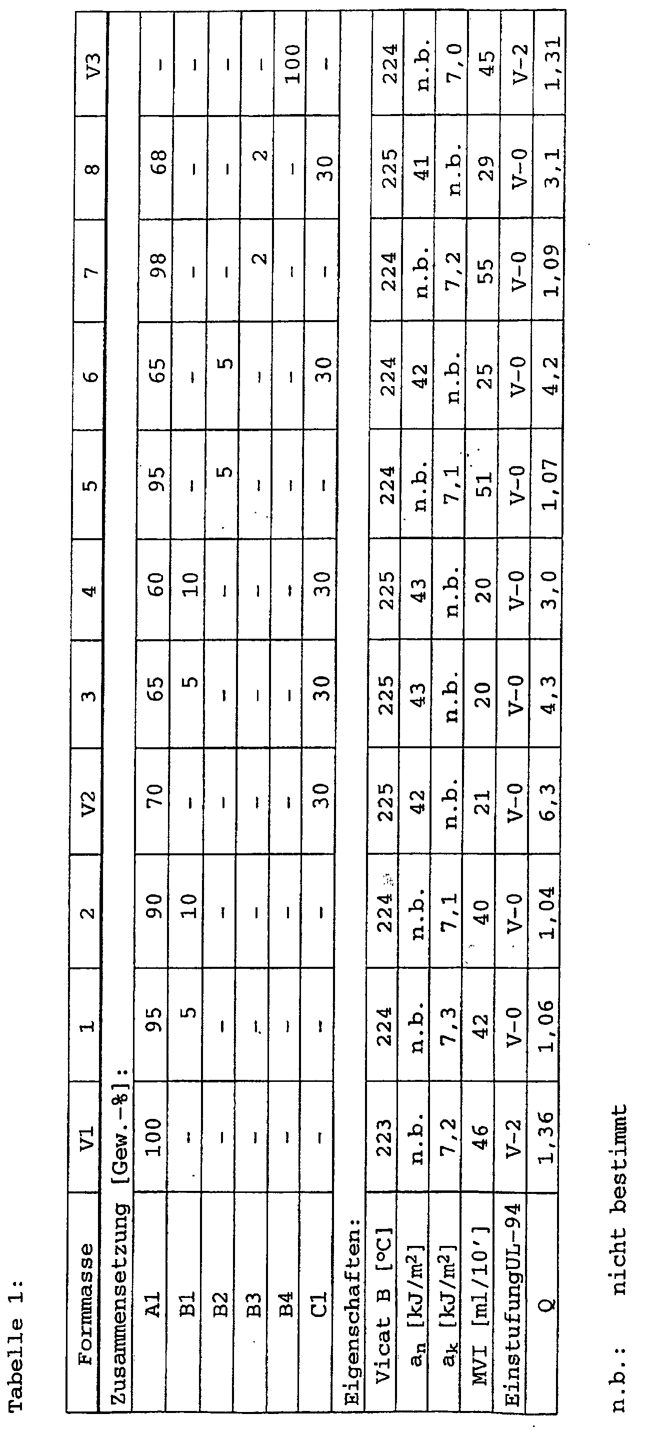

Die erfindungsgemäße Formmasse 1 und die Formmasse V3 gemäß US 3,960,815 enthielten die gleiche Gesamtmenge 1,1,1-Tris(4-hydroxyphenyl)ethan.

Die erfindungsgemäßen Formmassen zeichnen sich bei guten mechanischen Eigenschaften, wie beispielsweise hoher Wärmeformbeständigkeit oder Schlagzähigkeit bzw. Kerbschlagzähigkeit, guter Fließfähigkeit in der Schmelze und gutem Brandverhalten vor allem durch ihre verbesserte Schmelzestabilität aus.

## Patentansprüche

1. Formmassen, enthaltend
A) 39 bis 99 Gew.-% mindestens eines aus difunktionellen Monomereinheiten aufgebauten Polyarylenethersulfons,
B) 1 bis 20 Gew.-% mindestens eines Polyarylenethersulfons, enthaltend 0,1 bis 10 Gew.-%, bezogen auf das Gesamtgewicht der Komponente B, sich von 1,1,1-Tris(4-hydroxyphenyl)ethan ableitende Einheiten,
C) 0 bis 60 Gew.-% mindestens eines Füllstoffs,
D) 0 bis 40 Gew.-% mindestens eines schlagzähmodifizierenden Kautschuks und
E) 0 bis 40 Gew.-% eines oder mehrerer unterschiedlicher Zusatzstoffe,
wobei die Gewichtsprozente der Komponenten A bis E zusammen 100 % ergeben.

2. Formmassen nach Anspruch 1, worin die Polyarylenethersulfone A
0 bis 100 Mol-% wiederkehrende Einheiten 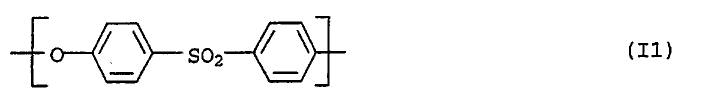 und
0 bis 100 Mol-% wiederkehrende Einheiten 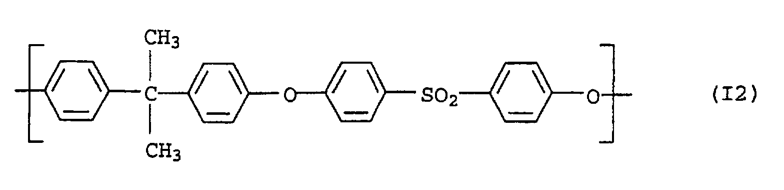 enthalten.

3. Formmassen nach Ansprüchen 1 oder 2, worin die Polyarylenethersulfone B
0 bis 100 Mol-% wiederkehrende Einheiten der Formel I1,
0 bis 100 Mol-% wiederkehrende Einheiten der Formel I2,
wobei die Stoffmengenprozente wiederkehrender Einheiten der Formeln I1 und I2 zusammen 100 Mol-% ergeben, und
0,1 bis 10 Gew.-%, bezogen auf das Gesamtgewicht der Polyarylenethersulfone B, sich von 1,1,1-Tris(4-hydroxyphenyl)ethan ableitende Einheiten enthalten.

4. Verfahren zur Herstellung von Formmassen gemäß den Ansprüchen 1 bis 3, **dadurch gekennzeichnet, daß** die Komponenten A bis E gemischt werden.

5. Verwendung der Formmassen gemäß den Ansprüchen 1 bis 3 zur Herstellung von Formteilen, Folien, Fasern oder Schäumen.

6. Formteile, Folien, Fasern oder Schäume, erhältlich aus den Formmassen gemäß den Ansprüchen 1 bis 3.

7. Formteile, Folien, Fasern oder Schäume gemäß Anspruch 6, die Bestandteile von Haushaltsartikeln, elektronischen Bauteilen, medizinisch-technischen Geräten oder Kraftfahrzeugbauteilen sind.

## Claims

1. A molding composition comprising
A) from 39 to 99% by weight of at least one polyarylene ether sulfone built up from bifunctional monomer units,
B) from 1 to 20% by weight of at least one polyarylene ether sulfone containing, based on the total weight of component B, from 0.1 to 10% by weight of units which derive from 1,1,1-tris(4-hydroxyphenyl)ethane,
C) from 0 to 60% by weight of at least one filler,
D) from 0 to 40% by weight of at least one impact-modifying rubber, and
E) from 0 to 40% by weight of one or more various additives,
where the percentages by weight of components A to E give 100% in total.

2. A molding composition as claimed in claim 1, where the polyarylene ether sulfones A contain
from 0 to 100 mol% of repeat units 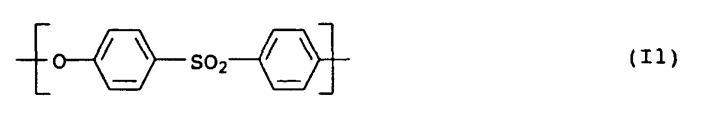 and
from 0 to 100 mol% of repeat units

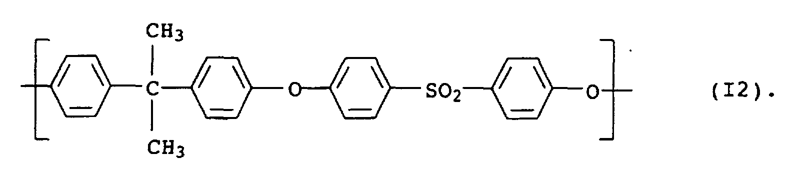

3. A molding composition as claimed in claim 1 or 2, where the polyarylene ether sulfones B contain
from 0 to 100 mol% of repeat units of the formula I1, and
from 0 to 100 mol% of repeat units of the formula I2,
where the molar percentages of repeat units of the formulae I1 and I2 give 100 mol% in total, and,
contain, based on the total weight of the polyarylene ether sulfones B, from 0.1 to 10% by weight of units which derive from 1,1,1-tris(4-hydroxyphenyl)ethane.

4. A process for preparing molding compositions as claimed in any of claims 1 to 3, which comprises mixing components A to E.

5. The use of the molding compositions as claimed in any of claims 1 to 3 for producing moldings, films, fibers, or foams.

6. A molding, a film, a fiber, or a foam, obtainable from the molding compositions as claimed in any of claims 1 to 3.

7. A molding, a film, a fiber, or a foam as claimed in claim 6, which is a constituent of household items, of electronic components, of devices in medical technology, or of motor vehicle components.

## Revendications

1. Masses de moulage, contenant
A) de 39 à 99% en poids d'au moins une polyarylène-éthersulfone constituée d'unités monomères difonctionnelles,
B) de 1 à 20% en poids d'au moins une polyarylène-éthersulfone contenant de 0,1 à 10% en poids, par rapport au poids total du composant B, d'unités dérivées du 1,1,1-tris(4-hydroxyphényl)éthane,
C) de 0 à 60% en poids d'au moins une matière de remplissage,
D) de 0 à 40% en poids d'au moins un caoutchouc modificateur de la résistance au choc,
E) de 0 à 40% en poids d'un ou plusieurs additifs différents,
les pourcentages en poids des composants A à E totalisant ensemble 100%.

2. Masses de moulage selon la revendication 1, dans lesquelles les polyarylène-éthersulfones A contiennent de 0 à 100% molaires d'unités répétitives 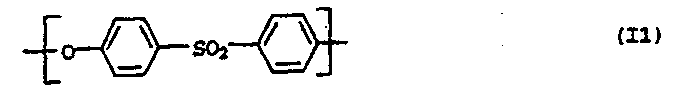 et
de 0 à 100% molaires d'unités répétitives

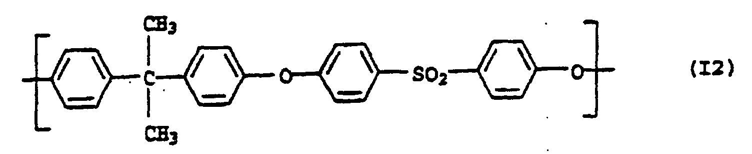

3. Masses de moulage selon les revendications 1 ou 2, dans lesquelles les polyarylène-éthersulfones B contiennent
de 0 à 100% molaires d'unités répétitives de formule I1,
de 0 à 100% molaires d'unités répétitives de formule I2,
les pourcentages quantitatifs des unités répétitives des formules I1 et I2 totalisant ensemble 100% molaires, et
de 0,1 à 10% en poids, par rapport au poids total des polyarylène-éthersulfones B, d'unités dérivées du 1,1,1-tris(4-hydroxyphényl)éthane.

4. Procédé de préparation de masses de moulage selon les revendications 1 à 3, **caractérisé en ce que** l'on mélange les composants A à E.

5. Utilisation des masses de moulage selon les revendications 1 à 3 pour la préparation de pièces moulées, de feuilles, de fibres ou de mousses.

6. Pièces moulées, feuilles, fibres ou mousses que l'on peut obtenir à partir des masses de moulage selon les revendications 1 à 3.

7. Pièces moulées, feuilles, fibres ou mousses selon la revendication 6, constituant des composants d'articles ménagers, des composants électroniques, des appareils médicotechniques ou des composants d'automobiles.
